(19) **Europäisches Patentamt**
**European Patent Office**
**Office européen des brevets**

(11) **EP 4 675 561 A1**

(12) **EUROPEAN PATENT APPLICATION**

(43) Date of publication:
**07.01.2026 Bulletin 2026/02**

(21) Application number: **24306103.3**

(22) Date of filing: **04.07.2024**

(51) International Patent Classification (IPC):
**G06T 9/00** $^{(2006.01)}$ **G06T 9/40** $^{(2006.01)}$
**H04N 19/597** $^{(2014.01)}$

(52) Cooperative Patent Classification (CPC):
**G06T 9/40; G06T 9/001; H04N 19/597**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **SANDRI, Gustavo 35510 CESSON-SEVIGNE (FR)**
• **CHUPEAU, Bertrand 35700 RENNES (FR)**
• **THUDOR, Franck 35000 RENNES (FR)**

(74) Representative: **Vossius & Partner Patentanwälte Rechtsanwälte mbB Siebertstraße 3 81675 München (DE)**

(54) **USING THE OCTREE TO DIVIDE A POINT CLOUD INTO BLOCKS OF ANY INTEGER SIZE**

(57) Some embodiments of a method may include: obtaining a point cloud, the point cloud including: a first set of information describing a geometry of the point cloud, and a second set of information describing attributes of the point cloud; transforming the first set of information, wherein transforming the first set of information includes: modifying the first set of information to enable an octree decomposition of the geometry of the point cloud; performing a transform tree generation process on the modified first set of information, wherein performing the transform tree generation process includes generating a transform tree bitstream; and performing a local geometry encoding process using at least the transform tree bitstream, wherein the local geometry encoding process includes generating a geometry encoded bitstream.

FIG. 7

## Description

### INCORPORATION BY REFERENCE

The present application incorporates by reference in their entirety the following applications: European Patent Application Serial No. EP24306041, entitled "ORDERING THE COEFFICIENTS OF A LOCAL ATTRIBUTE TRANSFORM FOR POINT CLOUD COMPRESSION" and filed June 28, 2024 ("'041 application"); European Patent Application Serial No. EP23306740, entitled "HYBRID POINT CLOUD ENCODING METHOD WITH LOCAL SURFACE REPRESENTATION" and filed October 9, 2023 ("'740 application"); and European Patent Application Serial No. EP23306739, entitled "TWO-STAGE POINT CLOUD ATTRIBUTE ENCODING SCHEME WITH NESTED LOCAL AND GLOBAL TRANSFORMS" and filed October 9, 2023 ("'739 application").

### BACKGROUND

Advances in 3D capturing and rendering technologies are enabling new applications and services in the fields of autonomous driving, cultural heritage archival, immersive telepresence and virtual/augmented reality. Point clouds have arisen as one of the main 3D scene representations for such applications. A point cloud frame includes a set of 3D points, each point being represented with its 3D position and possibly several attributes, such as color, transparency, and reflectance, among other things.

### SUMMARY

An example method in accordance with some embodiments may include: obtaining a point cloud, the point cloud including: a first set of information describing a geometry of the point cloud, and a second set of information describing attributes of the point cloud; transforming the first set of information, wherein transforming the first set of information includes modifying the first set of information to enable an octree decomposition of the geometry of the point cloud; performing a transform tree generation process on the modified first set of information, wherein performing the transform tree generation process includes generating a transform tree bitstream; and performing a local geometry encoding process using at least the transform tree bitstream, wherein the local geometry encoding process includes generating a geometry encoded bitstream.

For some embodiments of the example method, transforming the first set of information further includes generating a transformed geometry bitstream from the modified first set of information.

For some embodiments of the example method, the transform tree generation process includes an octree decomposition process.

For some embodiments of the example method, the transform tree generation process is based on a Region-Adaptive Hierarchical Transform (RAHT).

For some embodiments of the example method, the transform tree generation process is based on a triangle soup process.

For some embodiments of the example method, the local geometry encoding process further includes generating a reconstructed point cloud.

For some embodiments of the example method, modifying the first set of information includes modifying a location of at least one voxel in the point cloud.

For some embodiments of the example method, modifying the location of at least one voxel in the point cloud is based on a block size.

For some embodiments of the example method, performing the transform tree generation process includes dividing the point cloud into blocks based on the block size.

For some embodiments of the example method, modifying the location of at least one voxel in the point cloud includes moving the location of at least one voxel to be closer to a center of a larger region.

For some embodiments of the example method, modifying the location of at least one voxel in the point cloud includes moving the location of at least one voxel to be closer to another voxel.

Some embodiments of the example method my further include performing a local attribute encoding process using at least the transform tree bitstream and the second set of information, wherein the local attribute encoding process includes generating an attribute encoded bitstream.

Some embodiments of the example method my further include generating an output bitstream, wherein the output bitstream includes the geometry encoded bitstream.

For some embodiments of the example method, the output bitstream further includes the transformed geometry bitstream, the transform tree bitstream, and the attribute encoded bitstream.

An example apparatus in accordance with some embodiments may include: a processor; and a computer-readable medium storing instructions operative, when executed by the processor, to cause the apparatus to perform any one of the methods listed above.

**BRIEF DESCRIPTION OF THE DRAWINGS**

FIG. 1A is a system diagram illustrating an example set of interfaces for a system according to some embodiments.

FIG. 1B is a process flow diagram illustrating an example point cloud encoding and decoding according to some embodiments.

FIG. 2 is a process diagram illustrating an example point cloud compression scheme according to some embodiments.

FIG. 3 is a schematic perspective view illustrating an example octree decomposition according to some embodiments.

FIGs. 4A and 4B are schematic illustrations showing a first example 2D decomposition according to some embodiments.

FIGs. 5A and 5B are schematic illustrations showing a second example 2D decomposition according to some embodiments.

FIGs. 6A and 6B are schematic illustrations showing a third example 2D decomposition according to some embodiments.

FIG. 7 is a process diagram illustrating an example encoding and decoding of point cloud geometry according to some embodiments.

FIG. 8 is a process diagram illustrating an example encoding and decoding of point cloud attributes according to some embodiments.

FIG. 9 is a process diagram illustrating an example encoding and decoding of point cloud geometry and attributes simultaneously according to some embodiments.

FIG. 10 is a flowchart illustrating an example geometry encoding process according to some embodiments.

FIG. 11 is a flowchart illustrating an example geometry decoding process according to some embodiments.

FIG. 12 is a flowchart illustrating an example attribute decoding process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

**DETAILED DESCRIPTION**

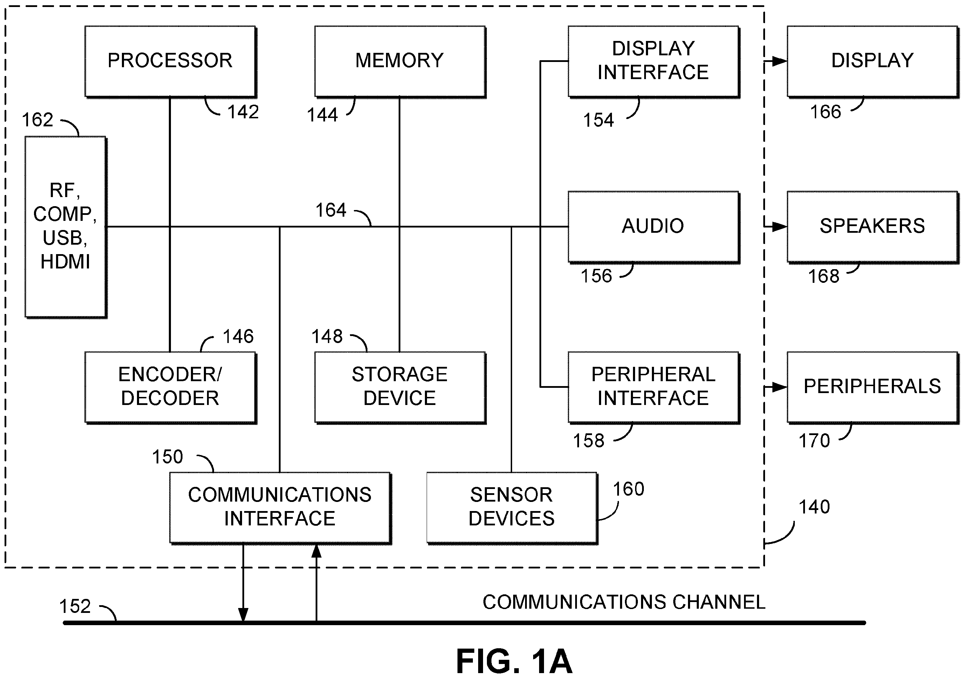

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

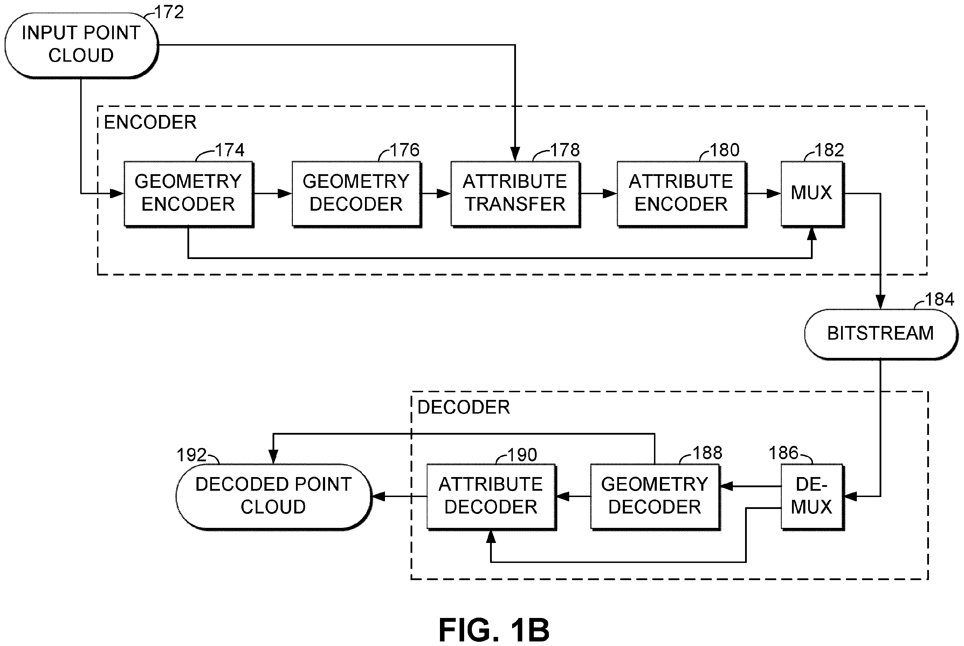

FIG. 1B is a process flow diagram illustrating an example point cloud encoding and decoding according to some embodiments. In an example of point cloud encoding and decoding, geometry and attributes are sequentially compressed, as illustrated in FIG. 1B. The attributes may be colors, for example. More precisely, the geometry is first compressed, then input attributes are transferred onto the reconstructed geometry (after decompression) and compressed. At the decoder side, the reconstructed geometry is available when decoding the attributes.

As illustrated in FIG. 1B, a geometry encoder 174 obtains an input point cloud 172. The encoded geometry is provided to a multiplexer 182 for encoding in a bitstream 184. The encoded geometry is also decoded at 176, so that the reconstructed geometry (the geometry that will be available to a decoder) may be used with attribute encoding. An attribute transfer process 178 is performed to transfer the attributes of the input point cloud 172 to the points of the reconstructed point cloud (which, in the case of lossy compression, will not necessarily be at the same positions as the input point cloud). The attributes of the reconstructed point cloud are encoded via an attribute encoder180, and the encoded attributes are provided to the multiplexer 182 for inclusion in the bitstream 184. At a decoder, the decoder obtains the bitstream 184. A demultiplexer 186 processes the bitstream 184 and provides the encoded geometry to a geometry decoder 188. The demultiplexer 186 also provides the encoded attributes to an attribute decoder 190. The attribute decoder 190 applies the decoded attributes to the reconstructed point cloud as provided by the geometry decoder 190, resulting in the decoded point cloud 192.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

Advances in 3D capturing and rendering technologies are enabling new applications and services in the fields of autonomous driving, cultural heritage archival, immersive telepresence and virtual/augmented reality. Point clouds have arisen as one of the main 3D scene representations for such applications. A point cloud frame includes a set of 3D points, each point being represented with its 3D position and possibly several attributes, such as color, transparency, and reflectance, among other things.

According to D. Graziosi, et al., An Overview of Ongoing Point Cloud Compression Standardization Activities: Video-Based (V-PCC) and Geometry-Based (G-PCC), 9:1 APSIPA TRANSACTIONS ON SIGNAL AND INFORMATION PROCESSING, e13 (2020), standardization activity for point cloud compression is carried out by the ISO/IEC JTC1/SC29/WG7 "MPEG 3D Graphics and Haptics Coding" group. The first edition of the Geometry-based Point Cloud Compression standard (G-PCC) standard is described as part 9 of the ISO/IEC 23090 series on the coded representation of immersive media: *Information technology - Coded representation of immersive media - Part* 9: *Geometry-based point cloud compression,* ISO/IEC 23090-9:2023.

Within the framework of G-PCC second edition in construction, the compression of dense dynamic point clouds with a geometry-based approach - that is in the 3D space domain, without 3D-to-2D round trip to leverage existing 2D video codecs - has been identified as a separate target. The current G-PCC encoder for dense dynamic point clouds, so called GeS-TM, is described in *GeS-TM v4: User Manual* of *Test Model v4 for Geometry-Based Solid Point Cloud Coding,* ISO/IEC JTC1/SC29/WG7, 144th MPEG Meeting, Hannover, Tech. Rep. N00750, Oct. 2023 and combines the following tools:

- pruned occupancy tree (octree) + triangle soups for geometry coding,
- Region-Adaptive Hierarchical Transform (RAHT) for color attribute coding,
- motion compensated inter-frame prediction, and
- context-adaptive arithmetic coding.

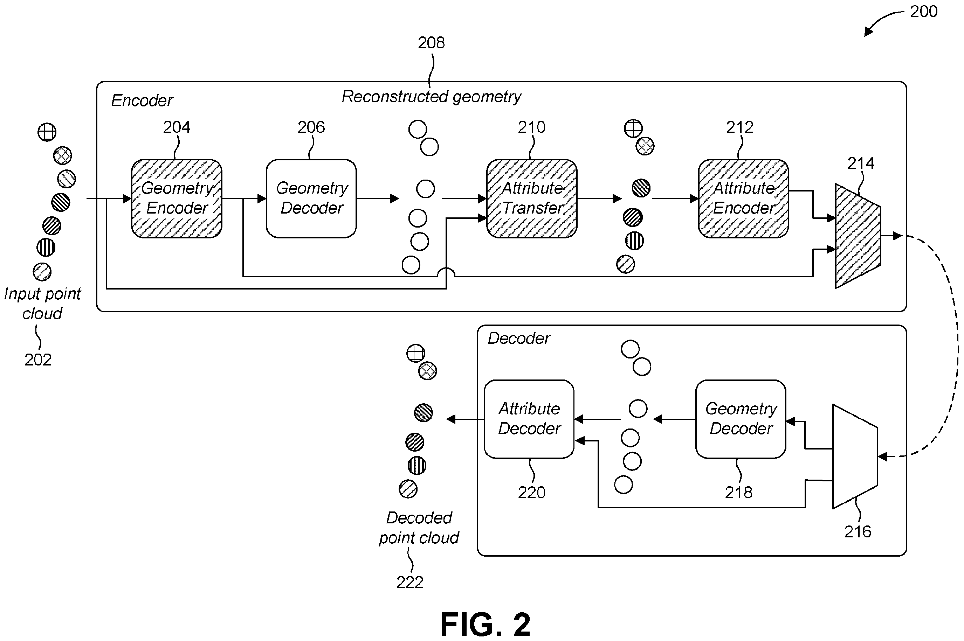

FIG. 2 is a process diagram illustrating an example point cloud compression scheme according to some embodiments. Geometry and attributes may be sequentially compressed, as illustrated in FIG. 2, where the attributes are the colors. More precisely, the geometry is first compressed, then input attributes are transferred onto the reconstructed geometry (after decompression) and compressed. At decoder side, the reconstructed geometry is available when decoding the attributes.

As illustrated in FIG. 2, a geometry encoder 204 obtains an input point cloud 202. The encoded geometry is provided to a multiplexer 214 for encoding in a bitstream. The encoded geometry is also decoded by geometry decoder 206, so that the reconstructed geometry (the geometry that will be available to a decoder) may be used with attribute encoding. An attribute transfer process 210 is performed to transfer the attributes of the input point cloud 202 to the points of the reconstructed point cloud (which, in the case of lossy compression, will not necessarily be at the same positions as the input point cloud). The attributes of the reconstructed point cloud are encoded via an attribute encoder 212, and the encoded attributes are provided to the multiplexer 214 for inclusion in a bitstream. The decoder obtains the bitstream. A demultiplexer 216 processes the bitstream and provides the encoded geometry to a geometry decoder 218. The demultiplexer 216 also provides the encoded attributes to an attribute decoder 220. The attribute decoder 220 applies the decoded attributes to the reconstructed point cloud as provided by the geometry decoder 220, resulting in the decoded point cloud 222.

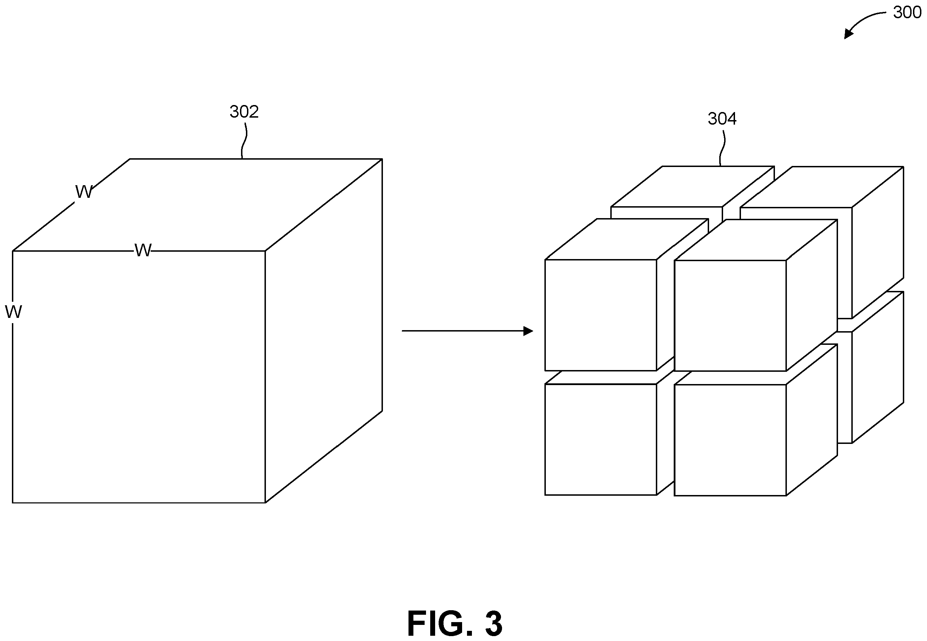

FIG. 3 is a schematic perspective view illustrating an example octree decomposition according to some embodiments. The points of a point cloud are usually voxelized in which the points are placed in a regular grid and each point is a voxel (a 3D extension of a pixel) of size $1 \times 1 \times 1$. The voxels in a voxelized point cloud may reside in a space of size $W \times W \times W$. An octree decomposition is commonly used to encode the geometry and the attributes. With an octree decomposition, the 3D space is successively halved along each direction, generating 8 regions of dimension $W/2 \times W/2 \times W/2$, as shown in FIG. 3. When using an octree decomposition to encode the geometry, a bit is used for each subregion to indicate if the region is void (bit = 0) or if the region is occupied by voxels (bit = 1). Therefore, a total of 8 bits may be used to signal which sub-regions are occupied. These bits are written to the bitstream at encoder side. The process is repeated for every occupied subregion until the subregion's dimension is equal to the size of a voxel ($1 \times 1 \times 1$). The decoder divides the 3D space in the same way as the encoder and reads the bits from the bitstream to determine which regions are occupied. At the last subdivision, all occupied sub-regions correspond to the position of a voxel.

An octree decomposition may be used to encode the attributes in a hierarchical manner, in which every division of the space corresponds to one layer on the hierarchy. This situation is the case, for example, for the region-adaptive hierarchical transform (RAHT), which is commonly used to encode the colors of a point cloud.

In order to make an encoder/decoder of point cloud able to be used for real time applications, the latency of encoding/decoding every point cloud frame needs to be reduced. One technique to do this reduction is by subdividing the point cloud frame into blocks that may be processed in parallel.

Many techniques to encode the geometry, such as octree, trisoup, and the signed distance function, are well suited to work by blocks, but they rely on octree decomposition to signal the blocks that are occupied. In this fashion, they start dividing the geometry using the octree decomposition, and stop the subdivision at the desired block size.

Octree decomposition also may be used to subdivide point clouds into blocks for coding of the attributes. Even though attribute coding does not need to signal which sub-regions are occupied, since the decoder knows the decoded geometry, the use of octrees is very efficient for dividing a point cloud into blocks whose size is a power of 2.

The use of octrees for this task works very well for the RAHT since the RAHT is based on the octree. The use of octrees also may be employed for any other attribute coding technique that works by blocks, such as Graph Fourier Transform (GFT), Discrete Cosine Transform (DCT), among others.

The size of the blocks executed in parallel may have an impact on the quality of the decoded point cloud and on the run time of the encoder and decoder. For a finer controlling of this parameter, allowing division into blocks of any integer size may be desirable. However, the octree decomposition may divide a point cloud only into blocks whose size is a power of 2.

This application discusses how to modify the geometry of a voxelized point cloud to enable the octree decomposition to divide a point cloud into blocks of any integer size. The octree decomposition may be used to encode the geometry and/or the attributes per block.

The octree decomposition is naturally suitable to divide a point cloud into blocks with dimensions that are a power of 2. The octree decomposition may divide a point cloud into blocks of any size by modifying the geometry information in such a way that block sizes that are not powers of 2 are seen virtually as block sizes that are a power of 2.

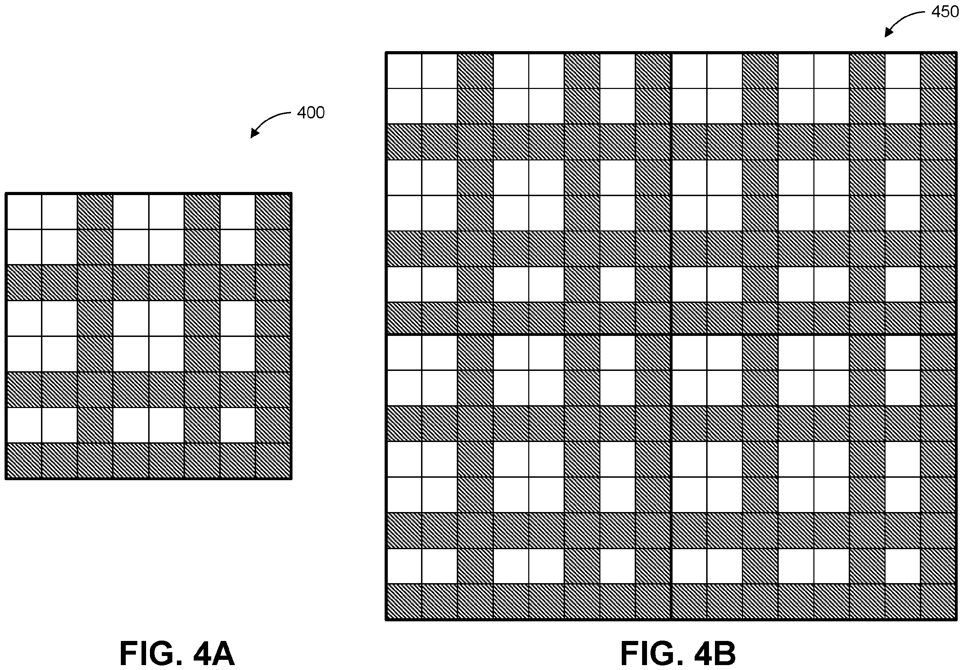

FIGs. 4A and 4B are schematic illustrations showing a first example 2D decomposition according to some embodiments. Let $p = (x,y,z)$ be the position of the voxels. Let $B$ be the desired block size for the division. Let

$$N = \lceil log2(B) \rceil$$ , where

$$\lceil \square \rceil$$

is the ceiling operator and

$$\lfloor \square \rfloor$$

is the flooring operator. The geometry of the voxels may be modified in a way such that the voxels that are inside a block of size $B \times B \times B$, will be seen as being within a block of size $2^N \times 2^N \times 2^N$, where $2^N \geq B$ due to the ceiling operator.

For the examples 400, 450 shown in FIGs. 4A and 4B, the block size (B) is 5. For some embodiments, the value of p (the position of the voxels) is modified into $\hat{p}$ as shown in Eq. 1:

$$\hat{p} = \left\lceil \frac{p \times 2^N}{B} \right\rceil \tag{1}$$

This change will result in a modification of the geometry as shown in FIGs. 4A and 4B, where B = 5. In FIGs. 4A and 4B, shaded squares are void spaces that are inserted due to the transform of the geometry, and the clear squares are occupied voxels. The inverse transformation for the position of the voxels is given by Eq. 2:

$$p = \left\lfloor \frac{(\hat{p}+1) \times B}{2^N} \right\rfloor \tag{2}$$

FIGs. 4A and 4B both show the effect of modifying the geometry. FIG. 4A shows the effect on a single block $B \times B$. FIG. 4A is meant to show how the modified geometry lies on the block $2^N \times 2^N$. FIG. 4B shows the effect on a region $2B \times 2B$. FIG. 4B is meant to show how the transform effectively divides the geometry into blocks of size $B \times B$ by dividing the geometry into blocks of size $2^N \times 2^N$.

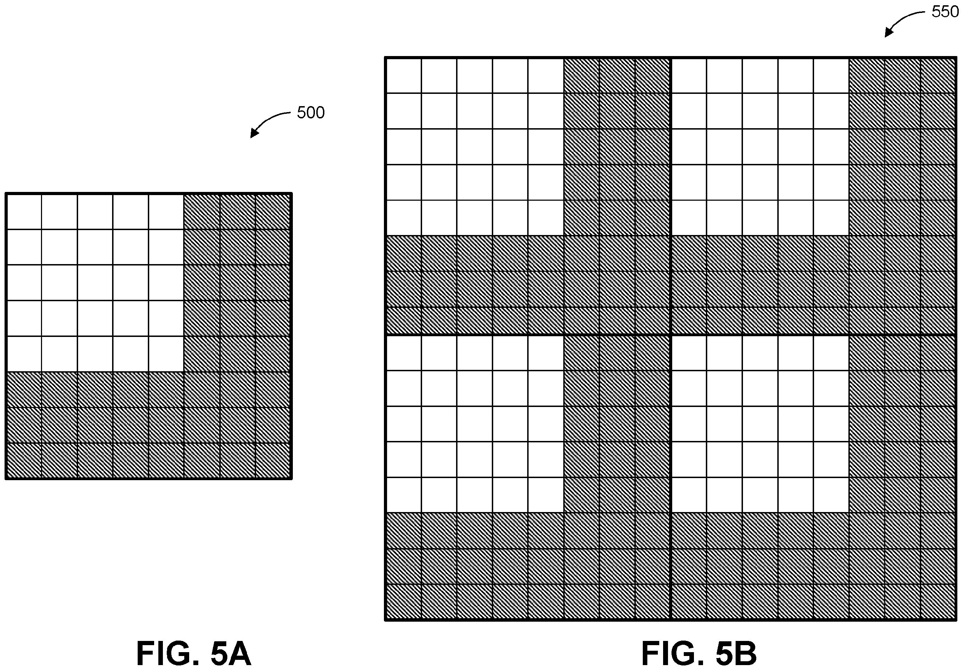

FIGs. 5A and 5B are schematic illustrations showing a second example 2D decomposition according to some embodiments. For the examples 500, 550 shown in FIGs. 5A and 5B, the block size (B) is 5. For some embodiments, the geometry is modified as shown in Eq. 3:

$$\hat{p} = p + \left\lfloor \frac{p}{B} \right\rfloor \times (2^N - B) \tag{3}$$

This change also adds empty space, but the added empty spaces are placed contiguously in FIGs. 5A and 5B. In FIGs. 5A and 5B, shaded squares are void spaces that are inserted due to the transform of the geometry, and the clear squares are occupied voxels. The inverse transformation is given by Eq. 4:

$$p = \hat{p} - \left\lfloor \frac{\hat{p}}{2^N} \right\rfloor \times (2^N - B) \tag{4}$$

FIGs. 5A and 5B both show the effect of modifying the geometry, similar to the description of FIGs. 4A and 4B but for Eq. 3.

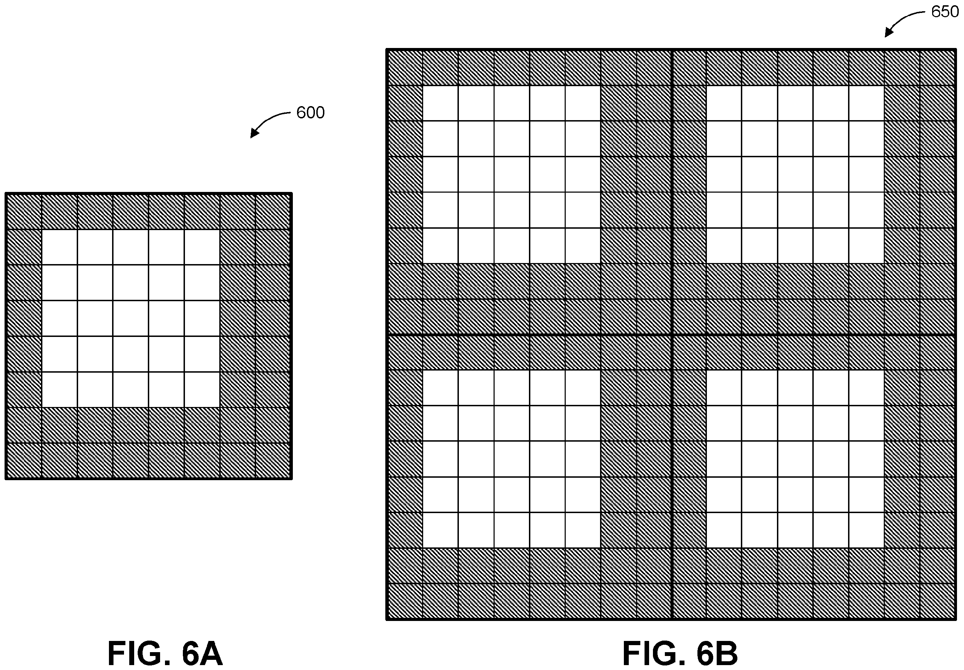

FIGs. 6A and 6B are schematic illustrations showing a third example 2D decomposition according to some embodiments. For the examples 600, 650 shown in FIGs. 6A and 6B, the block size (B) is 5. For some embodiments, the geometry is modified as shown in Eq. 5:

$$\hat{p} = p + \left\lfloor \frac{p}{B} \right\rfloor \times (2^N - B) + \left\lfloor \frac{2^N - B}{2} \right\rfloor \tag{5}$$

This is similar to the second embodiment, but the occupied points are centered to the block. In FIGs. 6A and 6B, shaded squares are void spaces that are inserted due to the transform of the geometry, and the clear squares are occupied voxels. The inverse transformation is shown in Eq. 6:

$$p = \hat{p} - \left\lfloor \frac{\hat{p}}{2^N} \right\rfloor \times (2^N - B) - \left\lfloor \frac{2^N - B}{2} \right\rfloor \tag{6}$$

FIGs. 6A and 6B both show the effect of modifying the geometry, similar to the description of FIGs. 4A and 4B but for Eq. 5.

Thus, using the modified geometry, the octree decomposition may be used to divide the modified point cloud into blocks of size $2^N \times 2^N \times 2^N$. However, the blocks contain only the points of the $B \times B \times B$ blocks of the original geometry.

The different embodiments have an impact on how to process the blocks after the division into blocks. The configuration shown in FIGs. 4A and 4B breaks the neighborhood between voxels by adding void space between neighboring voxels but distributes the voxels more evenly on the block, which may be helpful when using a transform based on the octree, such as RAHT.

The configuration shown in FIGs. 5A and 5B does not break the neighborhood, but the occupied voxels are not evenly distributed in the block.

The configuration shown in FIGs. 6A and 6B does not break the neighborhood. The points are not evenly distributed, but since they are centered on the block, this aspect reduces the imbalance when using RAHT.

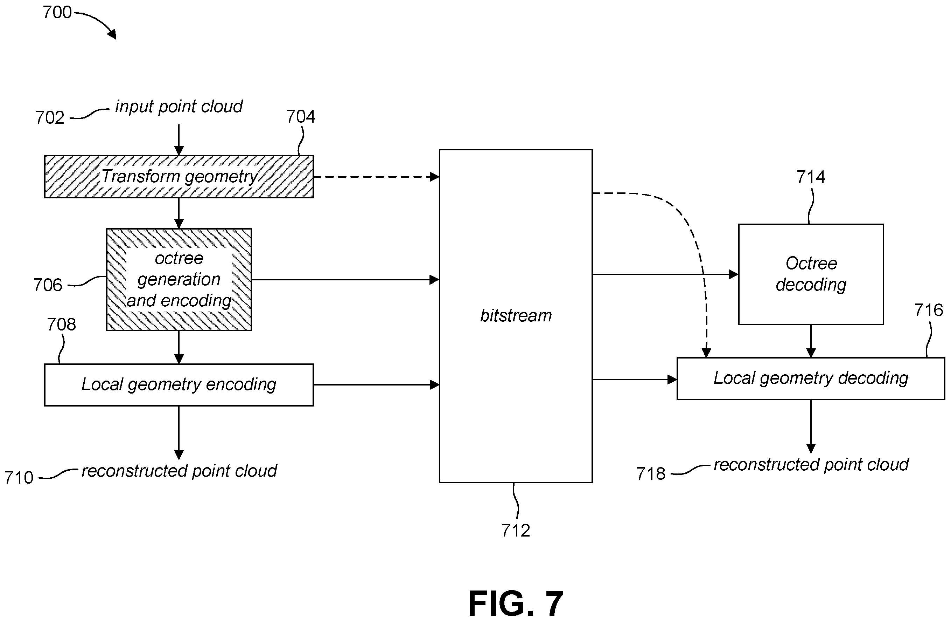

FIG. 7 is a process diagram illustrating an example encoding and decoding of point cloud geometry according to some embodiments. For some embodiments, FIG. 7 may be used to encode/decode the geometry and the attributes.

When encoding/decoding the geometry via the process 700 of FIG. 7, the geometry of the input point cloud 702 is transformed 704 using one of the configurations described in this application to enable encoding/decoding local blocks of arbitrary integer size (not necessarily powers of two). Metadata may be written to the bitstream that may include: (1) the size of the local blocks and (2) the method used to transform the geometry.

The point cloud with the modified geometry is then inputted into the octree encoder 706. The octree encoder 706 encodes the blocks' occupancy to the bitstream 712 and divides the point cloud into blocks. The blocks then undergo local geometry encoding 708 (such as octree or trisoup) that operates over each block. The local geometry encoder 708 may apply an inverse geometry transform on the block to recover the original geometry. This inverse transform may be performed over the decoded geometry just before starting processing of the geometry or just after. Performing the inverse transform just before encoding the geometry will allow the geometry encoder the ability to not have to deal with padding added by the transform. The decoder 714 uses the octree to decode the block's occupancy, and the local geometry decoder 716 operates over each occupied block to recover the original geometry as a reconstructed point cloud 718. The local geometry decoder 716 uses the metadata to inverse transform the geometry.

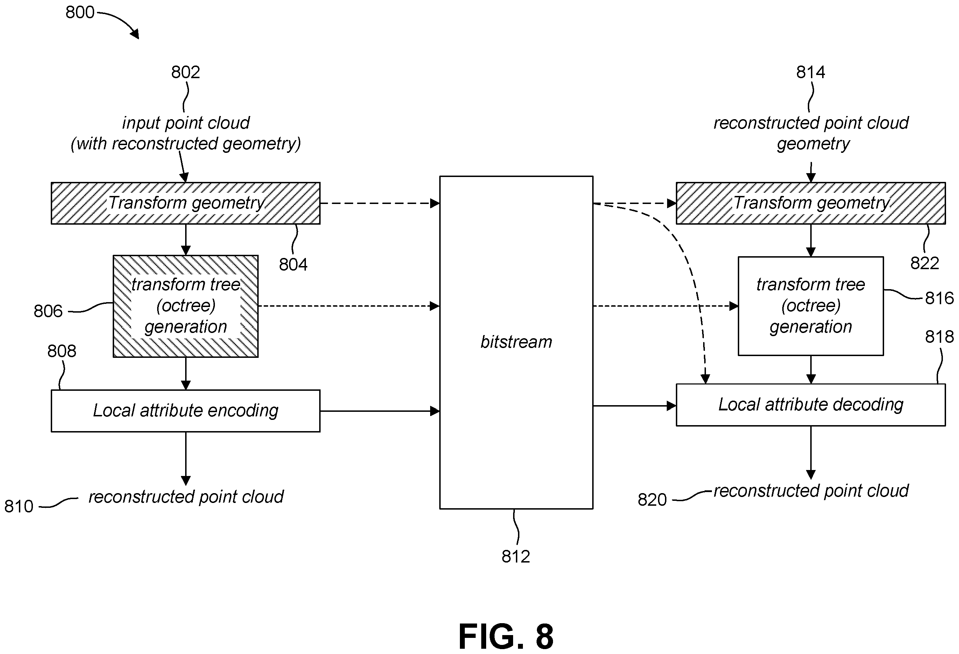

FIG. 8 is a process diagram illustrating an example encoding and decoding of point cloud attributes according to some embodiments. When encoding/decoding the attributes via the process 800 of FIG. 8, the input point cloud 802 uses the reconstructed geometry 814 (from the geometry encoder) with the attributes obtained from the original point cloud (which were transferred to the reconstructed geometry). The reconstructed geometry of the input point cloud 802 is transformed 804 using one of the configurations described in this application to enable encoding/decoding local blocks of arbitrary integer size (not necessarily powers of two). The transform tree 806, that is an octree, divides the point cloud into blocks. The transform tree 806 may be used, combined with RAHT, to send the coefficients of the average attributes of each block. The blocks are next processed locally, in blocks, by the local attribute encoding process 808. For some embodiments, the local attribute encoding process 808 may generate a reconstructed point cloud 810.

On the decoder side, the reconstructed point cloud geometry 814 is transformed 822 using one of the configurations described in this application to enable encoding/decoding local blocks of arbitrary integer size (not necessarily powers of two) possibly using the metadata written to bitstream. The transformed geometry is inputted into the transform tree 816 to divide the geometry into blocks. The transform tree 816 may be used, combined with RAHT, to recover the average attributes of each block. Then, blocks are locally processed by a local attribute decoding process 818 to recover the reconstructed point cloud attributes 820.

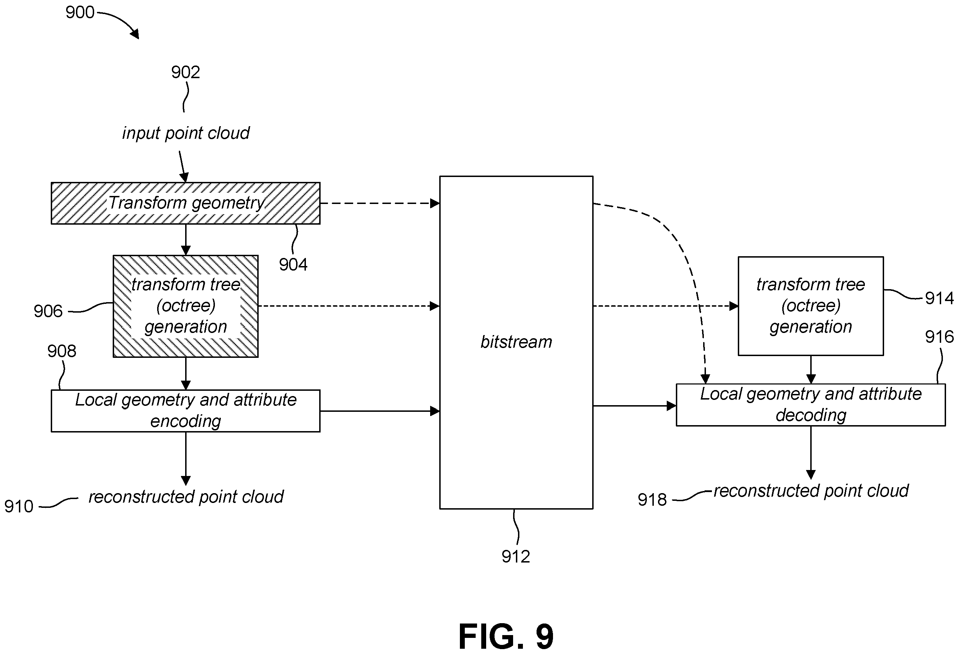

FIG. 9 is a process diagram illustrating an example encoding and decoding of point cloud geometry and attributes simultaneously according to some embodiments. When encoding/decoding the geometry via the process 900 of FIG. 9, the geometry of the input point cloud 902 is transformed 904 using one of the configurations described in this application to enable encoding/decoding local blocks of arbitrary integer size (not necessarily powers of two). Metadata may be written to the bitstream that may include: (1) the size of the local blocks and (2) the method used to transform the geometry.

The point cloud with the modified geometry is then inputted into the transform tree (octree) generation block 906. The transform tree (octree) generation block 906 encodes the blocks' occupancy into the bitstream 912 and divides the point cloud into blocks. The transform tree 906 may be used, combined with RAHT, to send the coefficients of the average attributes of each block. The blocks then undergo local geometry and attribute encoding 908 that operates over each block. The local geometry and attribute encoder 908 may apply an inverse geometry transform on the block to recover the original attributes as a reconstructed point cloud 910. The transform tree (octree) generation block 914 uses the octree to decode the block's occupancy, and the local geometry and attribute decoder 916 operates over each occupied block to decode the attributes as a reconstructed point cloud 918. The local geometry and attribute decoder 916 may use the metadata to inverse transform the geometry.

With the modification of the geometry as shown here, the size of blocks used for encoding/decoding may be determined. Also, the size of blocks used for attribute encoding may be set in accordance with the (not necessarily powers of two) sizes of the blocks used for geometry encoding. This aspect enables simultaneous and consistent localized parallel encoding of the geometry and attribute components of the point cloud.

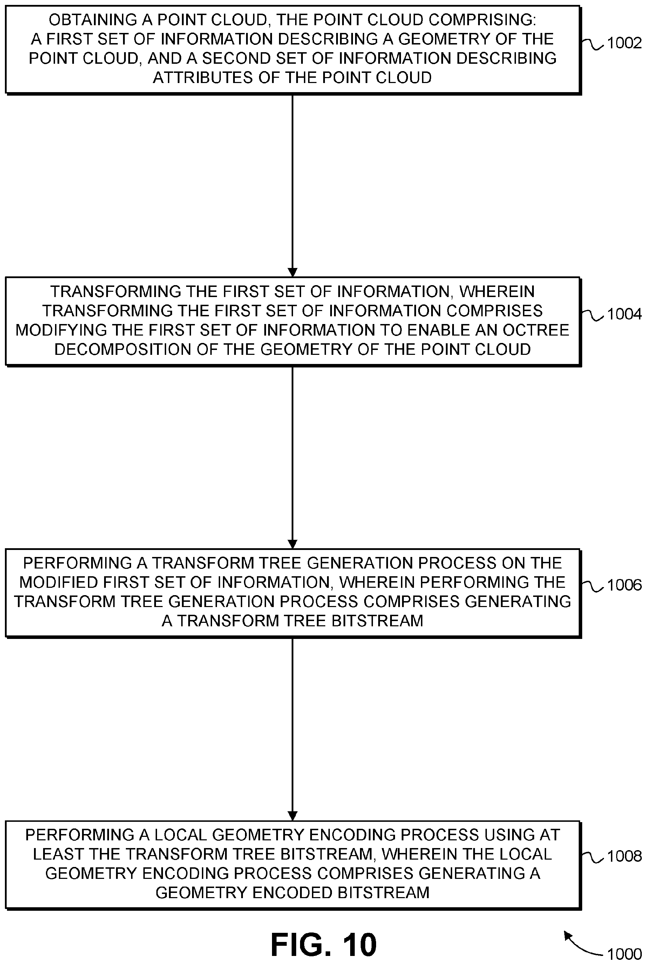

FIG. 10 is a flowchart illustrating an example geometry encoding process according to some embodiments. For some embodiments, an example process 1000 may include obtaining 1002 a point cloud, the point cloud including: a first set of information describing a geometry of the point cloud, and a second set of information describing attributes of the point cloud. For some embodiments, the example process 1000 may further include transforming 1004 the first set of information, wherein transforming the first set of information includes modifying the first set of information to enable an octree decomposition of the geometry of the point cloud. For some embodiments, the example process 1000 may further include performing 1006 a transform tree generation process on the modified first set of information, wherein performing the transform tree generation process includes generating a transform tree bitstream. For some embodiments, the example process 1000 may further include performing 1008 a local geometry encoding process using at least the transform tree bitstream, wherein the local geometry encoding process includes generating a geometry encoded bitstream.

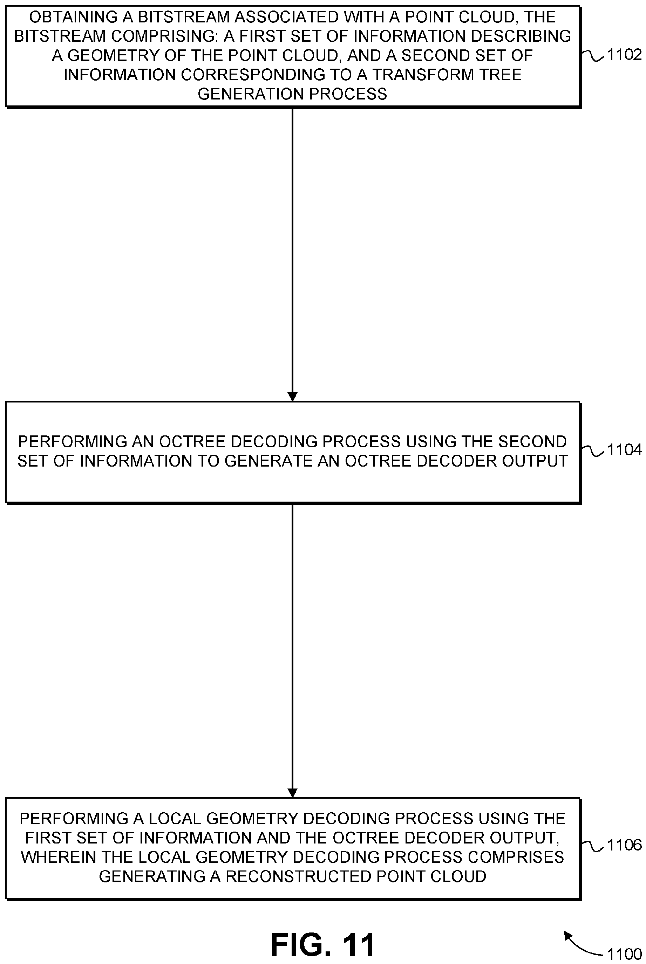

FIG. 11 is a flowchart illustrating an example geometry decoding process according to some embodiments. For some embodiments, an example process 1100 may include obtaining 1102 a bitstream associated with a point cloud, the bitstream including: a first set of information describing a geometry of the point cloud, and a second set of information corresponding to a transform tree generation process. For some embodiments, the example process 1100 may further include performing 1104 an octree decoding process using the second set of information to generate an octree decoder output. For some embodiments, the example process 1100 may further include performing 1106 a local geometry decoding process using the first set of information and the octree decoder output, wherein the local geometry decoding process includes generating a reconstructed point cloud.

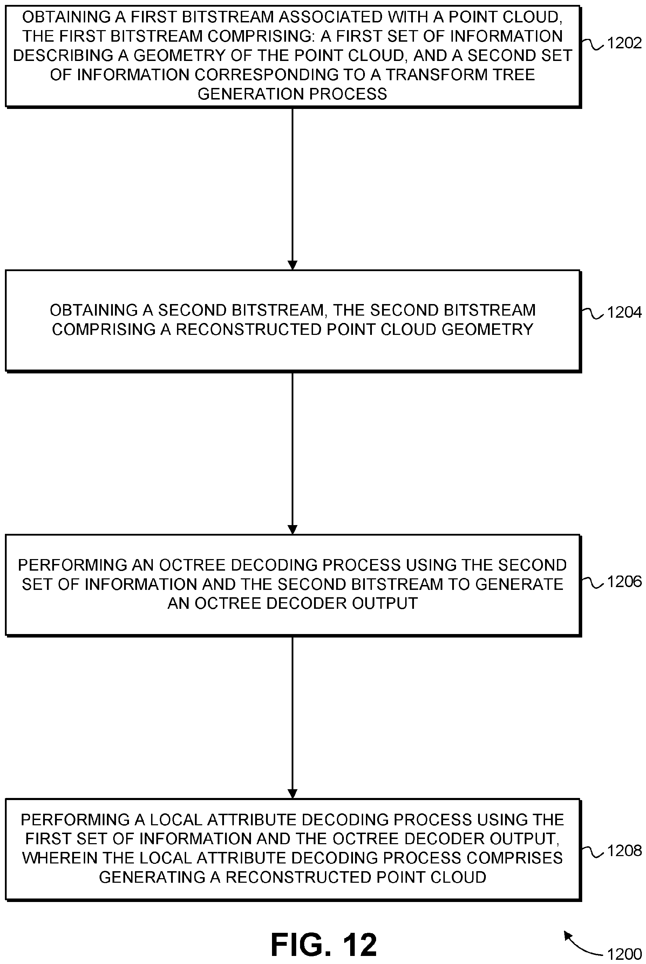

FIG. 12 is a flowchart illustrating an example attribute decoding process according to some embodiments. For some embodiments, an example process 1200 may include obtaining 1202 a first bitstream associated with a point cloud, the first bitstream including: a first set of information describing a geometry of the point cloud, and a second set of information corresponding to a transform tree generation process. For some embodiments, the example process 1200 may further include obtaining 1204 a second bitstream, the second bitstream including a reconstructed point cloud geometry. For some embodiments, the example process 1200 may further include performing 1206 an octree decoding process using the second set of information and the second bitstream to generate an octree decoder output. For some embodiments, the example process 1200 may further include performing 1208 a local attribute decoding process using the first set of information and the octree decoder output, wherein the local attribute decoding process includes generating a reconstructed point cloud.

An example method in accordance with some embodiments may include: obtaining a point cloud, the point cloud including: a first set of information describing a geometry of the point cloud, and a second set of information describing attributes of the point cloud; performing a geometry encoding process using at least the first set of information, wherein the geometry encoding process generates a geometry bitstream, and performing an attribute encoding process using at least the second set of information, wherein the attribute encoding process generates an attribute bitstream, and outputting an output bitstream including the geometry bitstream and the attribute bitstream.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a point cloud, the point cloud including: a first set of information describing a geometry of the point cloud, and a second set of information describing attributes of the point cloud; transforming the first set of information, wherein transforming the first set of information includes modifying the first set of information to enable an octree decomposition of the geometry of the point cloud; performing a transform tree generation process on the modified first set of information, wherein performing the transform tree generation process includes generating a transform tree bitstream; and performing a local geometry encoding process using at least the transform tree bitstream, wherein the local geometry encoding process includes generating a geometry encoded bitstream.

For some embodiments of the example method, transforming the first set of information further includes generating a transformed geometry bitstream from the modified first set of information.

For some embodiments of the example method, the transform tree generation process includes an octree decomposition process.

For some embodiments of the example method, the transform tree generation process is based on a Region-Adaptive Hierarchical Transform (RAHT).

For some embodiments of the example method, the transform tree generation process is based on a triangle soup process.

For some embodiments of the example method, the local geometry encoding process further includes generating a reconstructed point cloud.

For some embodiments of the example method, modifying the first set of information includes modifying a location of at least one voxel in the point cloud.

For some embodiments of the example method, modifying the location of at least one voxel in the point cloud is based on a block size.

For some embodiments of the example method, performing the transform tree generation process includes dividing the point cloud into blocks based on the block size.

For some embodiments of the example method, modifying the location of at least one voxel in the point cloud includes moving the location of at least one voxel to be closer to a center of a larger region.

For some embodiments of the example method, modifying the location of at least one voxel in the point cloud includes moving the location of at least one voxel to be closer to another voxel.

Some embodiments of the example method my further include performing a local attribute encoding process using at least the transform tree bitstream and the second set of information, wherein the local attribute encoding process includes generating an attribute encoded bitstream.

Some embodiments of the example method my further include generating an output bitstream, wherein the output bitstream includes the geometry encoded bitstream.

For some embodiments of the example method, the output bitstream further includes the transformed geometry bitstream, the transform tree bitstream, and the attribute encoded bitstream.

An example apparatus in accordance with some embodiments may include: a processor; and a computer-readable medium storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

**1.** A method comprising:

    obtaining a point cloud, the point cloud comprising:

        a first set of information describing a geometry of the point cloud, and

a second set of information describing attributes of the point cloud;

transforming the first set of information, wherein transforming the first set of information comprises modifying the first set of information to enable an octree decomposition of the geometry of the point cloud;
performing a transform tree generation process on the modified first set of information, wherein performing the transform tree generation process comprises generating a transform tree bitstream; and
performing a local geometry encoding process using at least the transform tree bitstream, wherein the local geometry encoding process comprises generating a geometry encoded bitstream.

2.  The method of claim 1, wherein transforming the first set of information further comprises generating a transformed geometry bitstream from the modified first set of information.

3.  The method of any one of claims 1-2, wherein the transform tree generation process comprises an octree decomposition process.

4.  The method of any one of claims 1-3, wherein the transform tree generation process is based on a Region-Adaptive Hierarchical Transform (RAHT).

5.  The method of any one of claims 1-3, wherein the transform tree generation process is based on a triangle soup process.

6.  The method of any one of claims 1-5, wherein the local geometry encoding process further comprises generating a reconstructed point cloud.

7.  The method of any one of claims 1-6, wherein modifying the first set of information comprises modifying a location of at least one voxel in the point cloud.

8.  The method of claim 7, wherein modifying the location of at least one voxel in the point cloud is based on a block size.

9.  The method of claim 8, wherein performing the transform tree generation process comprises dividing the point cloud into blocks based on the block size.

10. The method of any one of claims 7-9, wherein modifying the location of at least one voxel in the point cloud comprises moving the location of at least one voxel to be closer to a center of a larger region.

11. The method of any one of claims 7-10, wherein modifying the location of at least one voxel in the point cloud comprises moving the location of at least one voxel to be closer to another voxel.

12. The method of any one of claims 1-11, further comprising:

performing a local attribute encoding process using at least the transform tree bitstream and the second set of information,
wherein the local attribute encoding process comprises generating an attribute encoded bitstream.

13. The method of any one of claims 1-12, further comprising:

generating an output bitstream,
wherein the output bitstream comprises the geometry encoded bitstream.

14. The method of claim 13, wherein the output bitstream further comprises the transformed geometry bitstream, the transform tree bitstream, and the attribute encoded bitstream.

15. An apparatus comprising:

a processor; and
a computer-readable medium storing instructions operative, when executed by the processor, to cause the apparatus to perform the method of any one of claims 1 through 14.

**FIG. 1A**

EP 4 675 561 A1

FIG. 1B

EP 4 675 561 A1

**FIG. 2**

EP 4 675 561 A1

FIG. 3

**FIG. 4A**

**FIG. 4B**

EP 4 675 561 A1

FIG. 5B

550

FIG. 5A

500

**FIG. 6A**

**FIG. 6B**

EP 4 675 561 A1

**FIG. 7**

**FIG. 8**

EP 4 675 561 A1

**FIG. 9**

EP 4 675 561 A1

OBTAINING A POINT CLOUD, THE POINT CLOUD COMPRISING: A FIRST SET OF INFORMATION DESCRIBING A GEOMETRY OF THE POINT CLOUD, AND A SECOND SET OF INFORMATION DESCRIBING ATTRIBUTES OF THE POINT CLOUD ⟿ 1002

TRANSFORMING THE FIRST SET OF INFORMATION, WHEREIN TRANSFORMING THE FIRST SET OF INFORMATION COMPRISES MODIFYING THE FIRST SET OF INFORMATION TO ENABLE AN OCTREE DECOMPOSITION OF THE GEOMETRY OF THE POINT CLOUD ⟿ 1004

PERFORMING A TRANSFORM TREE GENERATION PROCESS ON THE MODIFIED FIRST SET OF INFORMATION, WHEREIN PERFORMING THE TRANSFORM TREE GENERATION PROCESS COMPRISES GENERATING A TRANSFORM TREE BITSTREAM ⟿ 1006

PERFORMING A LOCAL GEOMETRY ENCODING PROCESS USING AT LEAST THE TRANSFORM TREE BITSTREAM, WHEREIN THE LOCAL GEOMETRY ENCODING PROCESS COMPRISES GENERATING A GEOMETRY ENCODED BITSTREAM ⟿ 1008

# FIG. 10

⟍ 1000

OBTAINING A BITSTREAM ASSOCIATED WITH A POINT CLOUD, THE BITSTREAM COMPRISING: A FIRST SET OF INFORMATION DESCRIBING A GEOMETRY OF THE POINT CLOUD, AND A SECOND SET OF INFORMATION CORRESPONDING TO A TRANSFORM TREE GENERATION PROCESS — 1102

PERFORMING AN OCTREE DECODING PROCESS USING THE SECOND SET OF INFORMATION TO GENERATE AN OCTREE DECODER OUTPUT — 1104

PERFORMING A LOCAL GEOMETRY DECODING PROCESS USING THE FIRST SET OF INFORMATION AND THE OCTREE DECODER OUTPUT, WHEREIN THE LOCAL GEOMETRY DECODING PROCESS COMPRISES GENERATING A RECONSTRUCTED POINT CLOUD — 1106

# FIG. 11 — 1100

OBTAINING A FIRST BITSTREAM ASSOCIATED WITH A POINT CLOUD, THE FIRST BITSTREAM COMPRISING: A FIRST SET OF INFORMATION DESCRIBING A GEOMETRY OF THE POINT CLOUD, AND A SECOND SET OF INFORMATION CORRESPONDING TO A TRANSFORM TREE GENERATION PROCESS ～1202

OBTAINING A SECOND BITSTREAM, THE SECOND BITSTREAM COMPRISING A RECONSTRUCTED POINT CLOUD GEOMETRY ～1204

PERFORMING AN OCTREE DECODING PROCESS USING THE SECOND SET OF INFORMATION AND THE SECOND BITSTREAM TO GENERATE AN OCTREE DECODER OUTPUT ～1206

PERFORMING A LOCAL ATTRIBUTE DECODING PROCESS USING THE FIRST SET OF INFORMATION AND THE OCTREE DECODER OUTPUT, WHEREIN THE LOCAL ATTRIBUTE DECODING PROCESS COMPRISES GENERATING A RECONSTRUCTED POINT CLOUD ～1208

# FIG. 12 ～1200

Europäisches
Patentamt

European
Patent Office

Office européen
des brevets

# EUROPEAN SEARCH REPORT

**Application Number**

EP 24 30 6103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "G-PCC codec description", 130. MPEG MEETING; 20200420 - 20200424; ALPBACH; (MOTION PICTURE EXPERT GROUP OR ISO/IEC JTC1/SC29/WG11), , no. n19331 25 June 2020 (2020-06-25), XP030289576, Retrieved from the Internet: URL:http://phenix.int-evry.fr/mpeg/doc_end _user/documents/130_Alpbach/wg11/w19331.zi p w19331.docx [retrieved on 2020-06-25] * paragraph [03.1]; figure 1 * ----- | 1-15 | INV. G06T9/00 G06T9/40 H04N19/597 |
| X | CAO CHAO ET AL: "Compression of Sparse and Dense Dynamic Point Clouds-Methods and Standards", PROCEEDINGS OF THE IEEE, IEEE. NEW YORK, US, vol. 109, no. 9, 16 June 2021 (2021-06-16) , pages 1537-1558, XP011872689, ISSN: 0018-9219, DOI: 10.1109/JPROC.2021.3085957 [retrieved on 2021-08-18] * paragraph [00IV]; figure 18 * ----- | 1,15 | |
| X | US 2020/252657 A1 (LASSERRE SEBASTIEN [FR] ET AL) 6 August 2020 (2020-08-06) * claim 33 * ----- | 1,15 | TECHNICAL FIELDS SEARCHED (IPC) G06T H04N |

The present search report has been drawn up for all claims

| Place of search | Date of completion of the search | Examiner |
|---|---|---|
| Munich | 4 December 2024 | Oelbaum, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6103

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | Publication date | Patent family member(s) | | Publication date |
|---|---|---|---|---|
| US 2020252657 A1 | 06-08-2020 | CN | 111417985 A | 14-07-2020 |
| | | EP | 3467778 A1 | 10-04-2019 |
| | | EP | 3692503 A1 | 12-08-2020 |
| | | US | 2020252657 A1 | 06-08-2020 |
| | | WO | 2019070952 A1 | 11-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24306041 A
- EP 23306740 A

- EP 23306739 A


**Non-patent literature cited in the description**

- **D. GRAZIOSI et al.** An Overview of Ongoing Point Cloud Compression Standardization Activities: Video-Based (V-PCC) and Geometry-Based (G-PCC). *APSIPA TRANSACTIONS ON SIGNAL AND INFORMATION PROCESSING*, 2020, vol. 9 (1), e13